# NOUVEAU FASCICULE DE BREVET EUROPEEN

(11) **EP 0 306 431 B2**
(45) Date de publication et mention de la décision concernant l'opposition: **10.07.1996**
(45) Mention de la délivrance du brevet: 04.12.1991
(21) Numéro de dépôt: 88470016.2
(22) Date de dépôt: 16.08.1988
(51) Int. Cl.: C02F 3/30, B01J 8/00

(54) **Procédé de réduction de la pollution dissoute dans un liquide**
Verfahren für die Verminderung von aufgelösten Verunreinigungen in einer Flüssigkeit
Process for the reduction of pollutions dissolved in a liquid

(30) Priorité: 27.08.1987 FR 8712060
(43) Date de publication de la demande: 08.03.1989
(73) Titulaire: SOCIETE DITE: SOGEA, F-92851 Rueil-Malmaison (FR)
(72) Inventeur: Bernard, Claude, F-93330 Neuilly sur Marne (FR); Hanus, François, F-78150 Le Chesney (FR); Marchand, Denis, F-78230 Le Pecq (FR)
(74) Mandataire: Derambure, Christian

(56) Documents cités:
- EP-A- 0 105 788
- EP-A- 0 302 545
- FR-A- 2 342 769
- FR-A- 2 371 955
- FR-A- 2 518 078
- FR-A- 2 583 406
- GB-A- 2 118 162
- JP-A-56 026 593
- US-A- 4 394 349

## Description

La présente invention est relative a un procédé de réduction de la pollution dissoute dans un liquide.

La présente invention a plus particulièrement pour objet un procédé de dénitrification des eaux potables.

Il est connu des procédés de dénitrification qui utilisent des microoganismes, autotrophes ou hétérotrophes, capables de se développer aussi bien en aérobie qu'en anaérobie, une source de carbone, constituée d'un alcool tel que l'éthanol ou d'acide acétique, permettant aux microorganismes de transformer les ions nitrates en azote, de l'acide phosphorique additionné à l'alcool étant utilise comme source de phosphore pour les microorganismes afin de respecter le rapport azote/carbone/phosphore nécessaire au bon déroulement du processus de dénitrification.

Il est connu par ailleurs, pour réduire la teneur en matière dissoute des eaux de faire circuler lesdites eaux à travers un lit de matériau granulaire sur lequel sont fixés des microorganismes,, les impuretés dissoutes des eaux à traiter étant ainsi mises en contact avec les microorganismes fixés.

Selon le processus décrit précédemment, les microorganismes consomment les composés carbonés et l'oxygène des nitrates entraînant ainsi un dégagement d'azote gazeux et la formation de matière solide constituée principalement par la proliferation des microorganismes fixés.

On connait ainsi des épurateurs biologiques, du type à écoulement vers le bas du liquide à traiter au travers d'un lit fixe de matériau granulaire servant de support aux microorganismes épurateurs, dans lesquels le lit de matériau granulaire est séparé d'une chambre de collecte du liquide traité par un plancher muni d'ouvertures permettant au liquide traité biologiquement de s'écouler.

On connaît par le document FR-A-2 583 406 un épurateur biologique à membrane du type à écoulement vers le bas qui comprend un récipient d'épuration rempli d'une matière filtrante, un aérateur dans le récipient, une chambre pour recueillir de l'eau traitée biologiquement située dans la partie inférieure du récipient, un tube de soulèvement d'air auquel est associé la chambre et un dispositif de séparation situé du sommet du tube de soulèvement d'air.

On connaît par le document JP-A-54-101 311 un procédé d'élimination des nitrates d'un effluent aqueux, dans lequel l'effluent traverse un lit de dénitrification de bas en haut. Le lavage du lit de dénitrification peut être simultané à l'épuration.

On connaît par la demande de brevet EP-A-0105788 un procédé et un dispositif de traitement anaérobie d'eaux résiduaires suivant lesquels l'eau à traiter et le matériau granulaire mis en turbulence, circulent de haut en bas en utilisant comme fluide moteur une partie du biogaz produit au cours du traitement. L'eau traitée, en raison de sa teneur en matières en suspension, nécessite cependant une étape supplémentaire de clarification pour pouvoir être rejetée à la rivière.

On connait aussi des épurateurs biologiques, du type à écoulement vers le haut du liquide à traiter au travers d'un lit fixe de matériau granulaire servant de support aux microorganismes épurateurs, dans lesquels le lit de matériau granulaire est séparé d'une chambre d'alimentation en liquide à traiter par un plancher muni d'ouvertures permettant au liquide à traiter de diffuser dans le lit granulaire.

Mais, dans les dispositifs de ce type, la prolifération des microorganismes qui adhèrent au support granulaire conduit à un colmatage progressif dudit lit qui entraîne ainsi une réduction progressive du débit d'eau traitée et donc une diminution de l'efficacité du dispositif.

Il est donc nécessaire d'effectuer périodiquement un lavage du lit de matériau granulaire. Ceci est en général réalisé en injectant une grande quantité d'eau sous pression et de l'air, ces deux injections étant effectuées conjointement ou alternativement, de telle sort que l'eau sous pression circule de bas en haut.

Ainsi, les matières solides colmatant le lit de matériau granulaire sont évacuées de celui-ci grâce au courant d'eau de lavage.

Un tel dispositif présente trois types d'inconvénients majeurs.

En premier lieu, le lavage du lit granulaire nécessite l'arrêt du dispositif puisqu'il devient impossible de faire circuler l'eau à traiter. Ainsi, s'il n'est pas possible d'arrêter l'épuration des liquides à traiter, il est nécessaire de disposer de plusieurs unités d'épurateurs, une de ces unités étant en phase de décolmatage pendant que les autres unités continuent de fonctionner.

En deuxième lieu, bien que le débit de lavage moyen utilise soit faible sur une journée, puisqu'il est de l'ordre de 4% du débit journalier d'eau traitée, le lavage du lit granulaire est effectué en moyenne lors d'un seul arrêt de 10 minutes. Ainsi, en 10 minutes, passent 4% du débit journalier, ce qui constitue un débit instantané très important qui nécessite donc en particulier des pompes et des réservoirs de collecte du liquide de lavage très importants.

En troisième lieu, le lavage discontinu du lit de matériau granulaire entraîne une variation de la quantité de microorganismes dans le lit qui fait varier les performances du dispositif au cours du temps, les performances d'un tel dispositif étant, en particulier, faibles après le lavage du lit granulaire qui élimine la grande majorité des microorganismes nécessaires au bon déroulement du processus.

Pour pallier ces inconvénients, on a proposé différents dispositifs dans lesquels le lavage du lit granulaire est effectué de façon continue parallèlement à l'épuration du liquide à traiter.

C'est ainsi que l'on connait par le brevet FR 2 585 972 un réacteur à lit fluidisé de matériau granulaire dans lequel le liquide à traiter, par voie aérobie ou anaérobie, s'écoule de bas en haut avec le lit de matériau granulaire fluidisé, ce lit étant prélevé dans sa partie supérieure pour être dirigé vers un circuit de nettoyage où sont séparés, d'une part, les grains du lit et, d'autre part, les matières solides enrobant ces grains, les grains étant ensuite réintroduits périodiquement dans le lit granulaire de traitement grâce à un tube de recyclage muni de moyens de règlage du débit de recyclage.

Mais, un tel dispositif nécessite d'une part la mise en oeuvre de moyens techniques importants pour permettre l'injection de gaz dans le lit granulaire et, d'autre part, un tel dispositif est très gourmand en énergie.

Par ailleurs, et en raison du principe même de la fluidisation, un tel dispositif ne peut être utilisé que dans un procédé de traitement par voie aérobie.

La présente invention a donc pour but de réaliser un dispositif d'épuration biologique de l'eau qui résout ces problèmes.

La présente invention a plus particulièrement pour objet un procédé de réduction de la pollution dissoute dans un liquide ayant les caractéristiques mentionnées dans les revendications.

D'autres caractéristiques et avantages ressortiront à la suite de la description qui va suivre faite en référence à la figure unique donnée à titre d'exemple non limitatif et qui représente un dispositif d'épuration biologique mettant en oeuvre le procédé selon la présente invention.

Le procédé selon la présente invention consiste à introduire, dans un lit de matériau granulaire sur lequel sont fixés des microorganismes, le liquide à traiter dont on veut éliminer la pollution dissoute.

Ce liquide à traiter est additionné de substances nutritives tel qu'un composé carboné et un composé phosphoré. Plus particulièrement on utilise un alcool tel que l'éthanol comme source de carbone et de l'acide phosphorique comme source de phosphore.

Selon un exemple de réalisation, pour une eau brute contenant 28,9 mg/l d'azote exprimé sous forme d'azote nitrique (N-NO3), on y ajoute une quantité d'éthanol permettant d'induire une DCO (demande chimique en oxygène) de 120 mg/l dans le liquide à traiter, et on y ajoute également une quantité d'acide phosphorique amenant 0,5 mg de phosphore par litre d'eau à traiter.

Ce liquide est ensuite conduit à circuler de bas en haut à partir de la zone dudit lit dans laquelle il a été introduit.

Arrivé à la partie supérieure dudit lit, le traitement biologique du liquide à traiter est terminé. Il est ainsi maintenu au-dessus dudit lit de matériau granulaire un volume de liquide traité biologiquement à partir duquel le liquide propre est évacué.

De façon continue le matériau granulaire support des microorganismes épurateurs est extrait à la base du lit sans aucune interruption du processus d'épuration biologique.

Le matériau granulaire est ainsi dirigé vers un circuit de nettoyage où il est débarassé des microorganismes en excès, puis, alors que le liquide de lavage contenant les microorganismes otés du matériau granulaire est évacué, le matériau granulaire lavé est recyclé à la partie supérieure du lit.

La figure unique représente une forme de réalisation d'un dispositif d'épuration biologique fonctionnant selon le procédé de l'invention.

Dans ce dispositif, un matériau granulaire 1 sous forme de particules granulaires, remplit partiellement une enceinte 2 constituée par une enveloppe verticale 3, cylindrique ou polygonale, reliée dans sa partie inférieure à un fond 4, conique ou pyramidal, dont le sommet 5 est dirigé vers le bas. Le matériau granulaire 1 peut être par exemple constitué d'un sable, mais d'autres matériaux granulaires peuvent être utilisés qui possèdent une microporosité de grains permettant un bon accrochage des microorganismes.

Un conduit principal d'alimentation en liquide à traiter 6 est relié à un dispositif distributeur 7 constitué d'une ou plusieurs couronnes concentriques ouvertes vers le bas. Ce dispositif distributeur 7, placé à l'intérieur de l'enceinte 2, est situé à la partie inférieure de l'enveloppe cylindrique 3.

Un conduit d'évacuation du lit granulaire s'ouvre à la partie inférieure de l'enceinte 2 de préférence à proximité du sommet 5. Ce conduit d'évacuation, comme représenté sur la figure unique, peut être constitué d'un simple tube vertical 8 situé au centre de l'enceinte verticale 2, mais il peut être aussi externe à cette enceinte 2.

A proximité immédiate de l'embouchure du conduit d'évacuation 8 s'ouvre un tube 9 en relation avec une pompe à air non représentée permettant à de l'air sous pression d'être injecté via ce tube 9 dans le conduit d'évacuation 8 du lit granulaire 1. Le conduit d'évacuation, constitué par le tube 8, débouche, à sa partie supérieure, à l'intérieur d'un élutriateur 10 situé au-dessus du lit granulaire 1. Dans l'exemple de réalisation représenté sur la figure unique cet élutriateur 10 est situé à l'intérieur de l'enceinte 2, mais il pourrait être situé à l'extérieur de cette dernière.

Cet élutriateur présente un orifice inférieur d'entrée 11, débouchant au-dessus du lit constitué par le matériau granulaire 1, et un orifice supérieur 12 de surverse, le tube 8 débouchant dans l'élutriateur 10 à la partie supérieure de ce dernier.

Cette surverse 12 réglable en hauteur, est reliée a un conduit 13 d'évacuation des liquides sales chargés d'impuretés.

Un trop plein 14 permet à une zone de liquide traité propre 15, située au-dessus du lit constitué par le matériau granulaire 1, d'être évacuée du dispositif d'épuration par un conduit 16.

Comme on le voit sur la figure unique, le niveau hydraulique du trop plein 14 est supérieur au niveau de la surverse 12 de l'élutriateur 10, ce qui est avantageux, comme on le verra plus loin. Par ailleurs, comme on le voit sur cette figure unique, le conduit d'évacuation 8 débouche dans l'élutriateur 10 à un niveau hydraulique supérieur au niveau hydraulique du trop plein 14.

Le fonctionnement du dispositif d'épuration est le suivant.

Le liquide à traiter auquel on a préalablement additionné des composés carboné (éthanol) et phosphoré (acide phosphorique) est introduit, via le conduit principal d'alimentation 6 et le dispositif distributeur 7, dans le lit de matériau granulaire 1 que l'on a auparavant ensemencé avec les microorganismes nécessaires au bon déroulement du procédé.

La répartition du liquide à traiter à l'intérieur du lit de matériau granulaire 1 pourrait, bien entendu, être effectuée à différents niveaux par plusieurs couronnes de répartition. De même, il serait possible de distribuer le liquide à traiter par toute la surface du cône 4 à la base de l'enceinte 2.

Mais, quel que soit le mode d'alimentation du dispositif d'épuration, le liquide à traiter circule toujours, dans l'enceinte 2, selon la flèche F, c'est-à-dire selon une voie ascendante.

Pendant son ascension, le liquide à traiter est en contact avec les microorganismes fixés sur le matériau granulaire constituant le lit. Selon le mécanisme déjà décrit, les microorganismes vont consommer l'oxygène des ions nitrates de l'eau à traiter ainsi que les composés carbonés.

Il y a ainsi dégagement de bulles d'azote et accroissement de la population des microorganismes.

Quand le liquide à traiter arrive à la limite supérieure du lit granulaire 1, le traitement biologique est alors achevé et il se forme donc, au-dessus du lit 1, la zone de liquide traité 15.

Les bulles d'azote formées lors du processus de dénitrification traversent donc le lit granulaire 1 et la zone de liquide traité 15 avant de rejoindre l'air libre.

Les microorganismes se développant dans le lit granulaire 1, on procède à un prélèvement dudit matériau granulaire par l'extrémité inférieure du conduit d'évacuation 8 en envoyant, par le tube 9, de l'air comprimé qui aspire alors le matériau situé à la base du conduit 4 situé à proximité du sommet 5.

Ainsi, le lit de filtration circule, à l'intérieur de l'enceinte 2, selon une voie descendante et donc à contre courant du liquide à traiter.

Le matériau granulaire sur lequel ont proliféré les microorganismes est ainsi évacué par le conduit d'évacuation 8 et dirigé vers l'élutriateur 10 par le courant ascendant d'air comprimé injecté par le tube 9.

L'ascension du mélange triphasique constitué par une phase liquide, le lit granulaire à laver, et l'air comprimé s'effectue selon un mode d'écoulement turbulent. Ainsi, les particules solides constituées par la prolifération des microorganismes sont décollées des grains constituant ce lit.

Dans l'élutriateur 10, le niveau de la surverse 12 étant inférieur au niveau du trop plein 14 de la phase liquide propre 15, cette dernière a, en permanence, tendance à remonter dans l'élutriateur 10 par l'orifice d'entrée 11. Il y a donc un écoulement ascendant de liquide traité dans l'élutriateur 10. Ainsi, à la sortie du conduit 8, dans l'élutriateur 10, les particules solides, moins denses que le matériau granulaire, sont entraînées via la surverse réglable 12 dans le conduit d'évacuation 13 des liquides sales chargés d'impuretés. En revanche, le matériau granulaire retombe par simple gravité par l'orifice 11 au sommet du lit 1 qui se trouve ainsi régénéré. Ainsi, le matériau granulaire, dans l'élutriateur 10, circule verticalement de haut en bas à contre courant du liquide traité propre prélevé à partir de la phase liquide propre 15 située au-dessus du lit de matériau granulaire.

Les phases de prélèvement, de nettoyage et de renvoi au sommet du lit du matériau granulaire ont ainsi lieu sans pour autant arrêter, ou même ralentir, le processus normal d'épuration biologique des liquides à traiter.

Selon une variante du procédé selon l'invention, il peut être intéressant d'effectuer une épuration par voie aérobie. Il suffit alors d'inclure dans le lit granulaire 1 un dispositif 17 d'amenée d'air dans ledit lit.

Cette dernière variante est particulièrement adaptée à l'utilisation du procédé selon l'invention dans le cadre d'un processus d'élimination de la pollution carbonée par voie aérobie des eaux résiduaires. Dans ce cas, il est bien évident que le liquide à traiter n'est plus additionné d'un composé carboné.

Des essais ont été menés pour comparer les performances d'un dispositif de diamètre 900 mm fonctionnant selon le procédé de l'invention et les performances d'une colonne à lit fixe à flux ascendant du type décrit dans le préambule de la présente demande.

La hauteur des lits de matériau granulaire ainsi que la granulométrie desdits lits étaient identiques.

Les deux dispositifs fonctionnaient simultanément, alimentés avec des eaux brutes contenant 26,1 mg/l d'azote exprimé sous forme d'azote nitrique, dans lesquelles on avait ajouté une quantité d'éthanol permettant d'induire une DCO (demande chimique en oxygène) de 140 mg/l dans le liquide à traiter, et une quantité d'acide phosphorique amenant O,5 mg de phosphore par litre de liquide à traiter.

Les deux dispositifs avaient été ensemences avec les mêmes souches bactériennes et fonctionnaient à la même temperature.

Les performances ont été mesurées en régime stable de fonctionnement, 24 heures après le lavage de la colonne à lit fixe. Les résultats obtenus dans ces conditions ont été les suivants :

| | Lit fixe | Procédé selon l'invention |
|---|---|---|
| Débit de l'alimentation (m³/m²/h) | 10,0 | 12,1 |
| Teneur en nitrites en sortie (mg N-NO2/l) | O,4 | 0,02 |
| Teneur en nitrates en sortie (mg N-NO3/l) | 2,34 | < 0,05 |

Il apparaît ainsi clairement que, toutes choses égales par ailleurs, le procédé selon l'invention présente des performances bien supérieures aux procédés et dispositifs fonctionnant actuellement dans l'industrie du traitement de l'eau.

Par ailleurs, une comparaison des performances et caractéristiques des installations à lit fixe, fonctionnant dans l'industrie et telles qu'elles sont publiées, avec les performances constatées avec les dispositifs fonctionnant selon le procédé de l'invention donne les résultats suivants :

| | | Lit fixe | Procédé selon l'invention |
|---|---|---|---|
| débit en m³/m²/h | | 8,2 | 12,1 |
| teneur en azote nitrique en mg/l | - en entrée | 15,1 à 16,3 | 26,1 |
| | - en sortie | < 4,5 | 0 |
| hauteur de lit en mètre | | 2,1 à 3 | 1,5 |
| volume de matériau en m³/m² de section | | 2,1 à 3 | 2,4 |

| abattement en azote | | | |
|---|---|---|---|
| par m² de section (kg N-NO3/m²/jour) | | 2,31 à 2,98 | 7,58 |
| par m³ de lit (kg N-NO3/m³/jour) | | O,77 à 1,42 | 5,05 |

Il apparaît là encore que le procédé selon l'invention permet de traiter à des débits supérieurs des eaux brutes contenant par ailleurs plus d'impuretés que les procédés et dispositifs habituellement utilisés dans l'industrie du traitement de l'eau. En outre, on voit que l'efficacité du présent procédé permet de réduire considérablement dans un facteur de l'ordre de 3 aussi bien la section des dispositifs d'épuration que le volume du lit de traitement.

## Revendications

1. Procédé de réduction de la pollution dissoute dans un liquide, au moyen d'un dispositif d'épuration biologique comprenant :
- une enceinte (2) remplie partiellement d'un lit de matériau granulaire (1) support de micro-organismes épurateurs ;
- un conduit (6) d'alimentation et un dispositif (7) distributeur du liquide à traiter placé dans l'enceinte (2) ;
- un trop plein (14) d'évacuation du liquide propre ;
- un conduit (8) s'ouvrant à la partie inférieure de l'enceinte (2) , dans lequel un courant d'air ascendant sous pression est injecté, débouchant à sa partie supérieure dans un élutriateur (10) situé au-dessus du lit de matériau granulaire (1), pourvu d'une surverse d'évacuation (12) ;
procédé du type dans lequel :
- on introduit le liquide à traiter dans le lit de matériau granulaire (1) et on le fait circuler de bas en haut en traversant le lit de manière que, pendant son ascension, il soit en contact avec les micro-organismes épurateurs ;
- on maintient au-dessus du lit de matériau granulaire (1) un volume de liquide traité biologiquement à partir duquel est évacué le liquide traité propre ;
- on prélève à la base du lit et on évacue par ascension dans le conduit (8) un mélange triphasique de phase liquide, du lit granulaire (1) à laver sur lequel ont proliféré les micro-organismes, d'air comprimé, de manière à décoller la prolifération de micro-organismes des grains du lit (1) ;
- on recycle le matériau granulaire nettoyé à la partie supérieure du lit (1) et, séparément, on évacue le liquide de nettoyage du matériau granulaire sali,
**caractérisé**
- en ce qu'on prélève le matériau granulaire support des micro-organismes épurateurs de façon continue, sans interruption du processus d'épuration biologique, le matériau granulaire lavé, débarrassé des micro-organismes en excès étant recyclé alors que le liquide de nettoyage contenant les micro-organismes otés du matériau granulaire est évacué par la surverse d'évacuation (12) ;
- en ce que le niveau hydraulique du trop plein (14) de liquide traité est supérieur à celui de la surverse d'évacuation (12), le liquide traité ayant dans l'élutriateur (10) un écoulement ascendant depuis le volume de liquide traité biologiquement et l'orifice d'entrée (11) de l'élutriateur (10) ;
- et en ce que le conduit (8) débouche dans l'élutriateur (10) à un niveau hydraulique supérieur à celui du trop plein (14) de liquide traité, les particules solides moins denses que le matériau granulaire (1), à la sortie du conduit (8), étant entraînées par la surverse d'évacuation (12), alors que, en revanche, le matériau granulaire (1) retombe par simple gravité à contre courant du liquide traité propre, par l'orifice (11).

2. Procédé suivant l'une quelconque des revendications 1 à 7, caractérisé en ce que le liquide à traiter pour sa dénitrification est additionné d'un composé carboné et d'un composé phosphoré.

3. Procédé selon la revendication 8, caractérisé en ce qu'on ajoute au liquide à traiter de l'éthanol et de l'acide phosphorique.

## Claims

1. A method for reducing the pollution dissolved in a liquid, using a biological purification device which comprises :
- a chamber (2) partially filled with a granular material bed (1) which supports the purifying microorganisms ;
- a feeding pipe (6) and a device (7) for dispensing the liquid to be treated, located within the chamber (2) ;
- an overflow pipe (14) for discharging the clean liquid ;
- a pipe (8) opening on the lower part of the chamber (2), wherein an upward flow of pressurised air is injected, and the upper part of which opens on a gas classifier (10) located above the granular material bed (1), provided with a discharge overflow (12) ;
a method of the type wherein :
- the liquid to be treated is introduced into the granular material bed (1) and flows upwards through the bed in such a manner that, on its way up, it comes into contact with the purifying microorganisms ;
- a volume of biologically treated liquid, from which the clean treated liquid is discharged, is maintained above the granular material bed ;
- a three-phase mixture of liquid phase is sampled from the bed base and discharged upwards in the pipe (8), of the granular bed (1) to be washed, on which the microorganisms have proliferated, compressed air, in such a manner that the proliferation of microorganisms can be separated from the bed grains (1) ;
- the washed granular material is recycled at the upper part of the bed (1) and, independently, the liquid for cleaning the soiled granular material is discharged,
characterised
- in that the granular material continuously supporting the purifying microorganisms, without any interruption of the biological purification process, the washed granular material free of excessive microorganisms being recycled whereas the cleaning liquid containing the microorganisms removed from the granular material is discharged through the discharge overflow (12) ;
- in that the hydraulic level of the treated liquid overflow pipe (14) is higher than that of the discharge overflow (12), the treated liquid being sent upwards in the gas classifier (10) from the volume of biologically treated liquid and the inlet (11) of the gas classifier (10) ;
- and in that the pipe (8) opens in the gas classifier (10) at a hydraulic level higher than that of the treated liquid overflow pipe (14), the solid particles which are not so heavy as the granular material (1), at the pipe outlet (8) being carried away through the discharge overflow (12), whereas, on the other hand, the granular material (1) falls by gravity through the hole (11), in reverse direction with respect to the clean treated liquid.

2. A method according to any of the claims 1 to 7, characterised in that a carbon compound and a compound containing phosphorus are added to said liquid to be treated for denitrification.

3. A method according to claim 8, characterised in that ethanol and phosphoric acid are added to the liquid to be treated.

## Patentansprüche

1. Verfahren zur Reduzierung der in einer Flüssigkeit gelösten Verschmutzung mittels einer Vorrichtung zur biologischen Aufbereitung, bestehend aus:
- einem umschlossenen Bereich (2), der teilweise mit einem Bett körnigen Materials (1) als Träger für die aufbereitenden Mikroorganismen angefüllt ist;
- einem Vorlauf (6) und einer Vorrichtung (7) zur Verteilung der in den umschlossenen Bereich (2) eingebrachten aufzubereitenden Flüssigkeit;
- einem Überlauf (14) zur Abführung der sauberen Flüssigkeit;
- einer sich an der unteren Partie des umschlossenen Bereichs (2) öffnenden Leitung (8), in die ein aufsteigender Luftstrom unter Druck eingespritzt wird und die in der oberen Partie in einen oberhalb des Betts körnigen Materials (1) angeordneten, mit einem Entlastungsüberlauf (12) versehenen Abscheider (10) mündet;
wobei das Verfahren von der Art ist, daß:
- man die aufzubereitende Flüssigkeit in das Bett körnigen Materials (1) einführt und sie von unten nach oben durch das Bett fließen läßt, so daß sie während ihres Aufstiegs mit den aufbereitenden Mikroorganismen in Berührung kommt;
- man über dem Bett körnigen Materials (1) ein Volumen der biologisch aufbereiteten Flüssigkeit aufrechterhält, aus der die saubere Flüssigkeit abgeführt wird;
- man an der Basis des Betts eine dreiphasige Mischung aus der flüssigen Phase, des zu waschenden körnigen Betts (1), auf der sich die Mikroorganismen vermehrt haben, und Druckluft entnimmt und durch Aufstieg in der Leitung (3) in der Weise abführt, daß die Mikroorganismenproliferation von den Körnern des Betts (1) abgelöst wird;
- man das gereinigte körnige Material in die obere Partie des Betts (1) zurückführt und die Reinigungsflüssigkeit getrennt vom verschmutzten körnigen Material abführt;
gekennzeichnet dadurch,
- daß das körnige Material als Träger für aufbereitende Mikroorganismen kontinuierlich, ohne Unterbrechung des biologischen Aufbereitungsprozesses, entnommen und das gewaschene, von den überschüssigen Mikroorganismen befreite körnige Material zurückgeführt wird, während die Reinigungsflüssigkeit, welche die vom körnigen Material entfernten Mikroorganismen enthält, durch den Entlastungsüberlauf (12) abgeführt wird;
- daß der Flüssigkeitsstand im Überlauf (14) der aufbereiteten Flüssigkeit höher ist als im Entlastungsüberlauf (12), wobei die aufbereitete Flüssigkeit im Abscheider (10) eine aufsteigende Strömung aufweist, die vom Volumen der biologisch aufbereiteten Flüssigkeit und der Eintrittsöffnung (11) des Abscheiders (10) ausgeht;
- und daß die Leitung (8) bei einem höheren Flüssigkeitsstand als im Überlauf (14) der aufbereiteten Flüssigkeit in den Abscheider (10) mündet, wobei die festen Partikeln, die weniger dicht sind als das körnige Material (1), am Ausgang der Leitung (8) durch den Entlastungsüberlauf (12) mitgeschwemmt werden, während das körnige Material (1) hingegen durch einfache Schwerkraft im Gegenstrom der sauberen Aufbereitungsflüssigkeit durch die Öffnung (11) fällt.

2. Verfahren nach einem der Ansprüche 1 bis 7, gekennzeichnet dadurch, daß die aufzubereitende Flüssigkeit zwecks Denitrifikation mit einer Kohlenstoffverbindung und einer Phosphorverbindung versetzt wird.

3. Verfahren nach Anspruch 8, gekennzeichnet dadurch, daß man der aufzubereitenden Flüssigkeit Äthanol und Phosphorsäure zusetzt.
